# EUROPEAN PATENT APPLICATION

(11) **EP 1 258 758 A2**
(43) Date of publication of application: **20.11.2002**
(21) Application number: 02009996.6
(22) Date of filing: 04.05.2002
(51) Int. Cl.: G02B 6/38

(54) **Fiber optic module attachment including a fiber locating connector**

(30) Priority: 07.05.2001 US 681603
(71) Applicant: Corning Cable Systems LLC, Hickory, NC 28601 (US)
(72) Inventor: Wagner, Karl M., Hickory, NC 28601 (US); Elkins II, Robert B., Hickory, NC 28601 (US)
(74) Representative: Sturm, Christoph, Dipl.-Ing.

(57) **Abstract**

A novel optical fiber module attachment is provided. The module attachment has a crimp assembly and a fiber crimp tube (20) disposed therein. The tube (20) is crimped or otherwise fixedly attached to the core of the fiber optic cable (26). The fiber crimp tube (20) has a shoulder that is fixedly captured within the crimp assembly, such that the core of the fiber optic cable (26) does not exhibit movement relative to the connector (10). In accordance to another aspect of the invention, the module attachment is a fiber crimp tube (20) having at least one shoulder (30) thereon. The fiber crimp tube (20) is crimped or otherwise attached to the fiber optic cable (26). The shoulder (30) is fixedly received in receiving ports on an optical device. A heat shrink tube (62) is optionally provided to connect an end of the tubular body to the cable to minimize the bend radius. The fiber crimp tube (20) may also have an inner compression sleeve (69) disposed between the fiber crimp tube (20) and the core of the cable. The fiber crimp tube (20) may also be covered by a water resistant material to protect the cable. Additionally, the fiber crimp tube (20) may comprise two portions connected by a living hinge. The two portions may be attached to the fiber optic cable (26) by a heat shrink sleeve an O-ring or a crimp tube (62).

## Description

### FIELD OF THE INVENTION

The present invention relates to a novel module attachment for a fiber optic cable. More particularly, the invention is directed to an optical fiber module attachment, which includes a fiber locating device.

### BACKGROUND OF THE INVENTION

Fiber optic cables may include one or more optical fibers capable of transmitting audio, video, or other information. Fiber optic cables are laid over long distances and must make twists and turns, and, therefore, require connectors to connect discrete segments of cables together or to connect a cable to a terminal or signal port of an apparatus or equipment. These fiber optic cables may have a single optical fiber or a plurality of optical fibers that carry the information. Generally, a protective acrylate primary fiber coating surrounds the bare optical fibers. The primary fiber coating is in turn usually covered by a layer of strength aramid fibers, which are generally covered by a protective outer coating. At each terminus, it is necessary to attach a connector securely to the fiber optic cable (or each optical fiber) so that the information can properly be transferred from the cable into a mating connector or communicating hardware. The fiber optic cable (optical fiber) must, therefore, be reliably and sturdily connected to the connector so that the information is preserved and properly transferred.

Typically, a predetermined length of optical fiber is inserted through the connector. Since optical signal transmission is accomplished by abutting the end of this optical fiber to a matching end of another optical fiber or optical equipment, this predetermined length assures good abutting contact for the signal to transfer. For example, if the length is too long, the fibers may buckle or slide over each other at the connection, and if the length is too short, the fiber ends inside the connector may not abut, resulting in high attenuation of signal. In the conventional connectors, the strength fibers and/or the protective outer coatings are attached typically by adhesives or by crimping to the connectors, as disclosed in U.S. Patent No. 5,806,175. Conventional connectors, however, do not attempt to secure the optical fibers to the connectors. As a result, the optical fibers are movable relative to its protective coatings or outer jackets. Although the optical fiber has a relatively low coefficient of thermal expansion, temperature variations along a long length of a fiber optic cable can cause a significant change in length in the optical fiber. As known in the art, a relatively small change in length of the cable may significantly change the predetermined length of the optical fiber within the connector, thereby negatively affect the quality of the signal transmission. Hence, there remains a need in the art for a connector that can minimize the effects of temperature-induced changes in fiber optic cables.

Furthermore, some fiber optic cables, such as the 900 µm cable, do not have aramid fibers or other strength members. Hence, the conventional crimp-type connectors are not suitable with this type of cable. Hence, there remains a need in the art for an attachment module suitable for these cables.

### SUMMARY OF THE INVENTION

Accordingly, it is an object of the present invention to provide an optical fiber module attachment that minimizes the adverse effects of temperature-induced changes in fiber optic cables.

Another object of the invention is to provide a locating device for a fiber optic cable that allows the cable to be attached to optical hardware or another cable without the need of a terminal connector or crimp assembly.

These and other objects of the present invention are realized by a fiber crimp tube having a body and at least one shoulder. The body is fixedly secured to an fiber optic cable or at least one optical fiber of the fiber optic cable, preferably by crimping. The fiber crimp tube may be received by optical hardware and be fixedly secured thereto. The fiber crimp tube may have a second shoulder or the first shoulder may have a connector, such as a bayonet mount attached thereto, to facilitate the connection to hardware or other connectors.

In accordance with another aspect of the invention, after being crimped to an optical fiber of the fiber optic cable, the fiber crimp tube is captured in a crimp assembly of a terminal connector such that any movement of the optical fiber relative to the crimp assembly or terminal connector is minimized and preferably eliminated. The strength fibers of the cable are preferably strain relieved to the crimp assembly.

The fiber crimp tube may have a resilient, compressible inner sleeve disposed between the fiber crimp tube and the optical fiber or the fiber optic cable. The inner sleeve may be made from a water resistant material, or the fiber crimp tube may be covered by a water resistant material. The fiber crimp tube may comprise two portions connected by a living hinge. Each portion may be configured to minimize and preferably eliminate the relative movement between the cable and the fiber crimp tube. An optional sleeve, such as a heat shrink sleeve, an O-ring, or a crimp tube, in lieu of or in addition to the living hinge, is provided to secure the two portions of the fiber crimp tube to the fiber optic cable.

### BRIEF DESCRIPTION OF THE DRAWINGS

In the accompanying drawings, which form a part of the specification and are to be read in conjunction therewith and in which like reference numerals are used to indicate like parts in the various views:
FIG. 1a is a perspective view of a connector in accordance with one embodiment of the present invention, and FIG. 1b is an exploded view showing the components of the connector of FIG. 1a;
FIG. 2a is a cross-sectional view of the connector shown in FIG. 1a, and FIG. 2b is an enlarged view of a portion of the connector shown in FIG. 2a;
FIG. 3a is a perspective view of the connector shown in FIG. 1a with a portion cutaway, and FIG. 3b is an enlarged view of a portion of the connector shown in FIG. 3a;
FIG. 4a is a perspective view of a connector in accordance with an embodiment of the present invention, and FIG. 4b is an exploded view showing the components of the connector of FIG. 4a;
FIG. 5a is a cross-sectional view of the connector shown in FIG. 4a, and FIG. 5b is an enlarged view of a portion of the connector shown in FIG. 5a;
FIG. 6a is a perspective view of a fiber crimp tube in accordance with another embodiment of the present invention, and FIG. 6b is perspective view of the fiber crimp tube shown in FIG. 6a connected to an optical fiber;
FIG. 7a is a perspective view of the fiber crimp tube in accordance with another embodiment of the present invention, and FIG. 7b is perspective view of the fiber crimp tube shown in FIG. 7a connected to an optical fiber;
FIG. 8 is a cross-sectional view of a part of a crimping tool usable with the connector in accordance to the present invention;
FIG. 9a is a perspective view of another embodiment of a fiber crimp tube in accordance with the present invention; FIG. 9b is a cross-sectional view of the fiber crimp tube in FIG. 9a along line 9b-9b;
FIG. 10a is a perspective view of another embodiment of a fiber crimp tube in accordance with the present invention; FIG. 10b is a cross-section view of the fiber crimp tube in FIG. 10a along line 10b-10b;
FIG. 11a is a perspective view of another embodiment of a fiber crimp tube with a sleeve in accordance with the present invention; FIG. 11b is an exploded view of the fiber crimp tube of FIG. 11a; FIG. 11c is an end view of the fiber crimp tube in FIG. 11a; and FIG. 11d is a cross-sectional view of the fiber crimp tube in FIG. 11c along line 11d-11d;
FIG. 12a is a perspective view of another embodiment of a fiber crimp tube in accordance with the present invention; FIG. 12b cross-sectional view of the fiber crimp tube in FIG. 12a along line 12b-12b; and FIG. 12c is an end view of the fiber crimp tube in FIG. 12a;
FIG. 13a is a perspective view of another embodiment of a fiber crimp tube in accordance with the present invention; FIG. 13b is an end view of the fiber crimp tube in FIG. 13a; FIG. 13c is a cross-sectional view of the fiber crimp tube in FIG. 13b along line 13c-13c; and FIG. 13d is a side view of the fiber crimp tube of FIG. 13a; and
FIG. 14a is a perspective view of another embodiment of a fiber crimp tube in accordance with the present invention; FIG. 14b is an end view of the fiber crimp tube in FIG. 14a; FIG. 14c is a cross-sectional view of the fiber crimp tube in FIG. 14b along line 14c-14c; FIG. 14d is an exploded, perspective view of the embodiment of the fiber crimp tube of FIG. 14a with an optional sleeve and a portion of a fiber optic ribbon; and FIG. 14e is a side elevation of the fiber crimp tube of FIG. 14d.

### DETAILED DESCRIPTION OF THE INVENTION

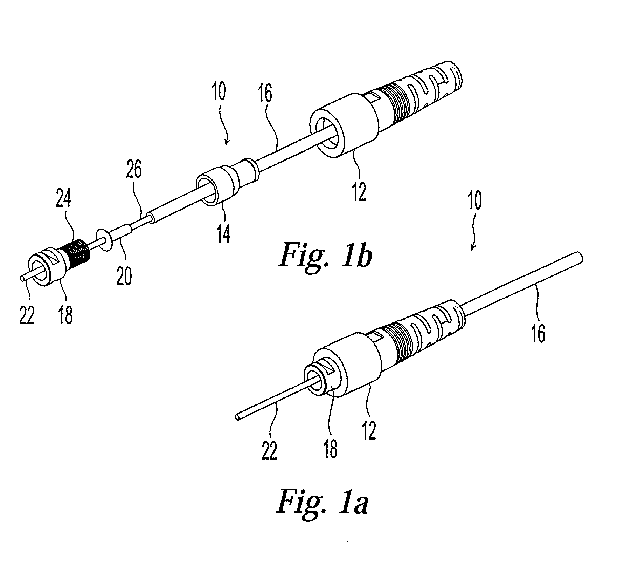

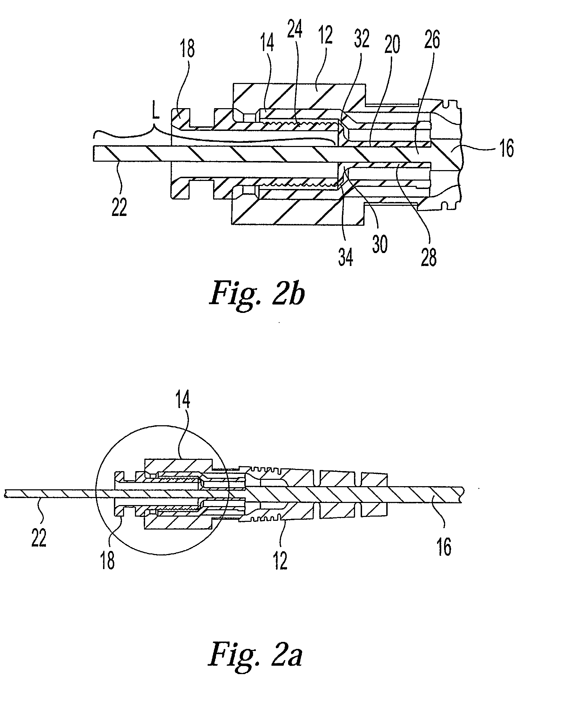

As shown generally in FIGS. 1a and 1b where like numbers designate like parts, reference number 10 broadly designates a module attachment or connector in accordance with one aspect of the present invention. Connector 10 may include a protective boot 12, a crimp band 14 adapted to crimp the strength fibers and/or outer the protective coating of fiber optic component 16 to the back end of crimp body 18. Fiber optic component 16 may be a fiber optic cable having a plurality of optical fibers in different cofigurations, including, xxxx others, loose tube, single tube, ribbon, tight buffered, or bundled, or it may be a single optical fiber, including a 900 µm or 2.0 µm jacketed optical fiber, or even a 250 µm fiber. In one advantageous embodiment, the front end of crimp body 18 has a bayonet mount adapted to be connected to another connector or to optical hardware and, as best seen in FIG. 2b, the back end of crimp body has groves to assist in holding the strength fibers. Connector 10 also has a fiber crimp tube 20 generally disposed internal to the connector and located between the crimp body 18 and crimp band 14, as best shown in FIG. 1b. An end portion 22 protrudes from the connector to engage another connector, a splice, or optical hardware. As discussed above, it is advantageous to keep this predetermined length L (FIG. 2b) inside the connector a constant length. It should be noted that the predetermined length L may differ depending on the type of crimp body 18, connector 10, or the type of connector, equipment, etc. to which the connector is connected.

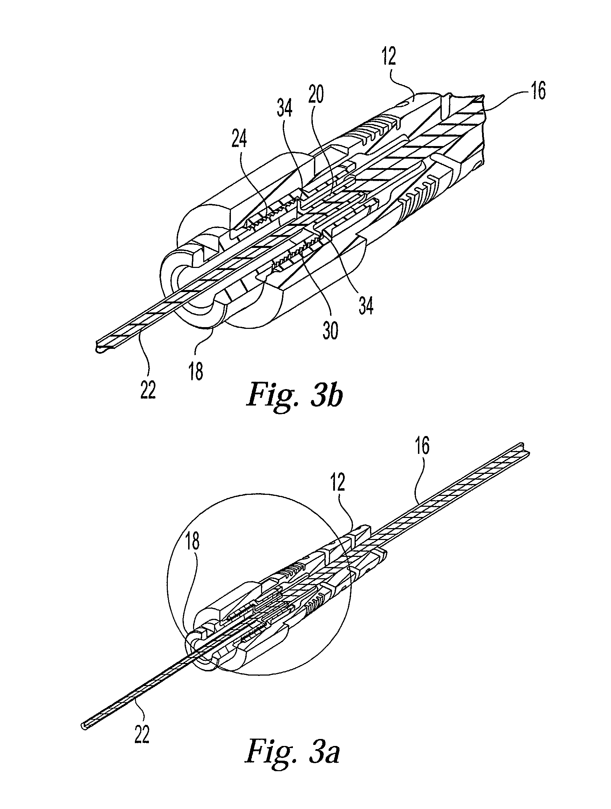

FIGS. 2a, 2b, 3a, and 3b more particularly illustrate the structures of connector 10. Prior to assembly, the optical fiber component 16 (which illustrates a 2.0µm fiber optic cable, although any size or type of optical cable or optical fibers could be used) is stripped of its outer protective coating(s) and the strength fibers, if any, to expose a length of 900µm coated optical fiber 26. The fiber crimp tube 20 is then slipped around and positioned over the 900µm coated optical fiber 26. As best seen in FIG. 2b, fiber crimp tube 20 preferably has an elongated tubular body 28 with shoulder 30 located at one end of the body. Preferably, the fiber crimp tube 20 is then crimped to the coated optical fiber 26 to secure the fiber crimp tube thereto by compressive force, as discussed in more detail below, such that there is no relative movement between the end portion 22 of the coated optical fiber 26 and the fiber tube 20. Alternatively, the fiber crimp tube 20 can be attached to a portion of the coated optical fiber 26 by adhesives, (e.g., epoxy). The end portion 22 of the coated optical fiber 26 can be further stripped of its coatings for connection to another connector, optical fiber, or piece of equipment. While the shoulder 30 is illustrated as being oriented toward the end portion 22 of the optical fiber, the fiber crimp tube may also be oriented with the elongated tube oriented toward the end portion 22.

The length L of end portion 22 measured from the shoulder 30 (or the end of crimp tube 20 closes to the end portion 22 if the fiber crimp tube were oriented in the opposite direction) of fiber crimp tube 20 to the end of coated optical fiber portion 26 is the predetermined, carefully measured length used in the connection. This predetermined length may be measured prior to the attachment of fiber crimp tube 20 to the coated optical fiber 26. Alternatively, the predetermined length may be cleaved to the proper length after attachment of the fiber crimp tube 20 and/or other components of a connector 10.

After the fiber crimp tube 20 is attached to the coated optical fiber 26, shoulder 30 of the fiber crimp tube is brought into abutment with the ridged surface end 24 of the crimp body 18. Advantageously, shoulder 30 is sized and dimensioned to prevent fiber crimp tube 20 from passing through the crimp body. Preferably, shoulder 30 has a beveled lip 32 sized and dimensioned to match sloped shoulder 34 of crimp band 14. (If the orientation were reversed, the beveled lip 32 could also be beveled in a corresponding manner.) After crimp band 14 is crimped onto crimp body 18, shoulder 30 of fiber crimp tube 20 is captured between the crimp body and shoulder 34 of the crimp band. Relative motion between the fiber crimp tube 20 and crimp assembly 14, 18 is minimized if not eliminated, and, since fiber crimp tube 20 is affixed to coated optical fiber 26 as described above, relative motion between the predetermined length 22 of the bare optical fiber and the crimp assembly 14, 18 (and thus the cable) is also minimize if not entirely eliminated. If fiber optic component 16 contracts due to a drop in temperature, the interaction between beveled lip 32 of shoulder 30 of fiber crimp tube and shoulder 34 of the crimp body 14 prevents the end portion 22 from retracting away from the connection with a mating optical fiber, thereby minimizing signal attenuation. On the other hand, if fiber optic component 16 expands due to a rise in temperature, the interaction between shoulder 30 of fiber crimp tube 20 and the back of ridge end 24 of the crimp body prevents the end portion 22 from protruding farther into the connection, thereby minimizing buckling or slipping at the abutting connection. The contraction or elongation due to the changes in temperature is absorbed by fiber optic component 16 and its components outside of connector 10.

Although omitted for clarity, the strength fibers and/or the outer coating is crimped in the annular space between the crimp body and the crimp ring. More specifically, the strength fibers and/or outer coating are positioned over the ridge surface 24 prior to crimping. This crimping process is well known in the art and is fully described in the '175 patent. Additionally, boot 12 is fitted over the crimp assembly 14, 18 to protect it from debris and to minimize the bend radius of fiber optic component 16. Additionally, while end portion 22 is shown to have a covering, it would be further stripped of any coverings to allow for insertion into a connector or other types of connection with other optical fibers or hardware.

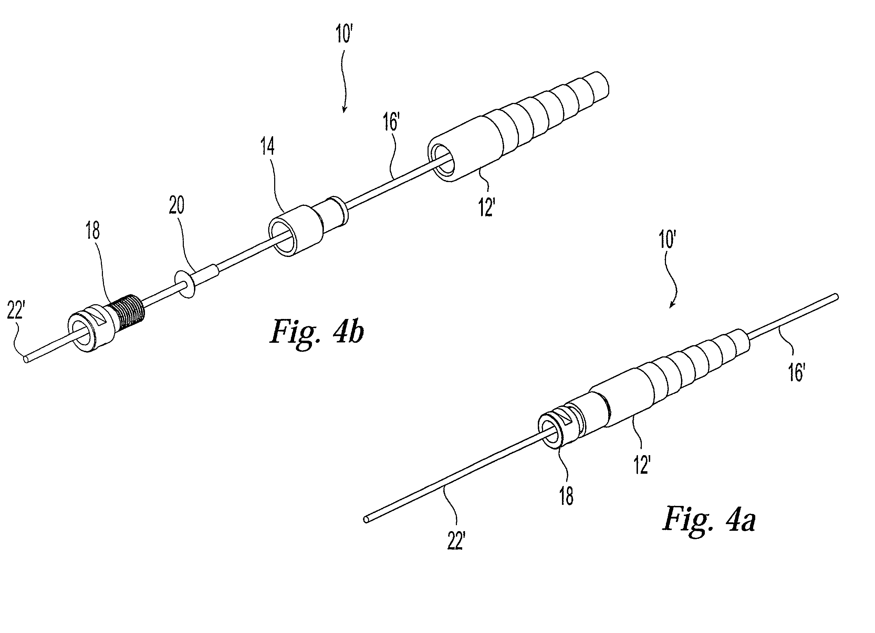

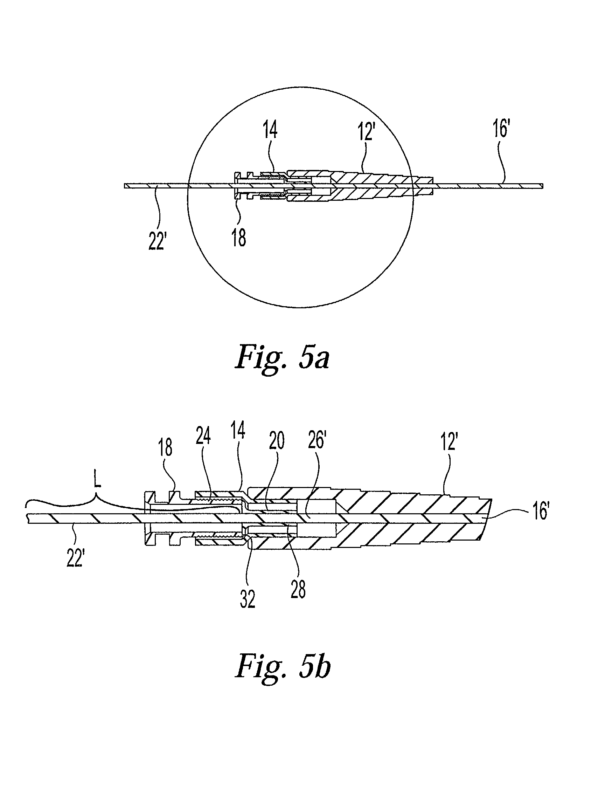

Another embodiment of the module attachment 10' according to the present invention is shown in FIGS. 4a-5b. Figs. 4a and 4b illustrate that this embodiment is similar to the first embodiment, with the exception that the fiber optic component 16' is a 900 µm cable rather than the 2.0mm cable. As can be seen in Figs. 5a and 5b, while the fiber crimp tube 20, crimp body 18, and crimp band 14 are the same, the boot 12' is configured to fit over the 900 µm fiber and only a portion of the crimp body 18, rather than the majority of the crimp body as in the first embodiment.

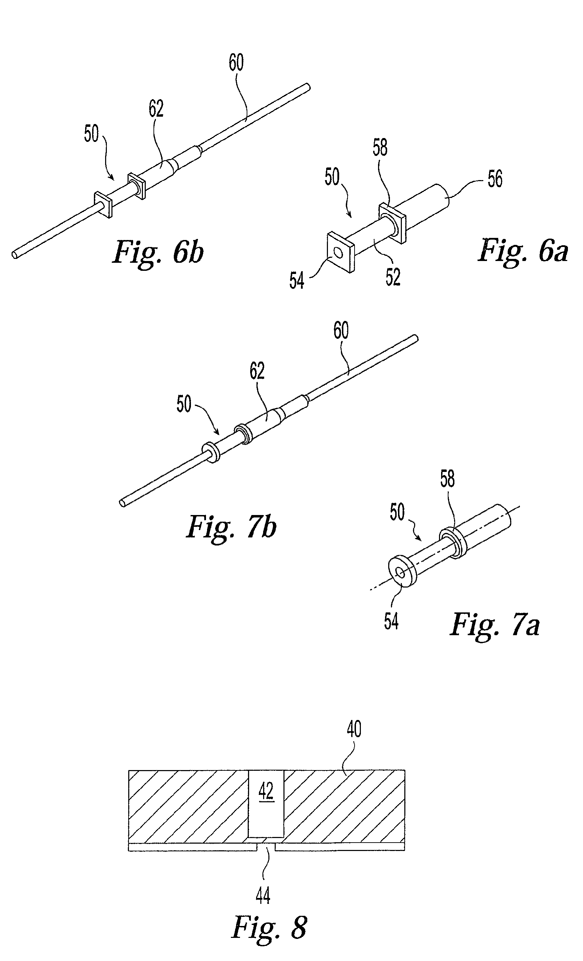

FIG. 8 shows one half of a tool suitable to crimp the fiber crimp body 20 to the coated optical fiber 26. Head 40 is mountable on a plier-type handheld device with each head mounted to one arm of the device. Head 40 has bore 42 adapted to receive a pin or other structure from such a device. Head 40 also has a channel 44 adapted to receive and crimp body 28 of fiber crimp body to coated optical fiber 26. Preferably, the width of channel 44 is about the same as the diameter of body 28, but may be slightly larger to allow for some lateral movement of the body. Alternatively, the head 40 could be mounted in a pneumatic press or the channel 44 could be machined into a hand-held device (e.g., pliers-type).

In accordance to another aspect of the invention, FIGS. 6a and 6b illustrate an optical fiber module attachment or connector suitable for use to attach to optical equipment, such as printed circuit boards, photonic components, DWDM, fiber optic modules, etc. As with the above embodiment, the fiber optic components used in this embodiment may not have strength fibers, such as is the case with a 900µm cable. Additionally, the fiber optic components used in any of the embodiments may also include a 250 µm optical fiber (fiber and jacket) and be within the scope of the invention. The attachment module or fiber crimp tube 50 has a body 52 and shoulder 54, similar to fiber crimp tube 20. Body 52 also has a crimp end 56 and an optional second shoulder 58. Fiber crimp tube 50 is slipped over the fiber optic component 60 (preferably 900 µm or 250 µm optical fiber) and crimp end 56 is crimped or otherwise attached to fiber optic component 60 as discussed above. A heat shrink sleeve 62 is shrunk over crimp end 56 and a section of fiber optic component 60 to maintain an appropriate bend radius of the fiber optic component. Shoulders 54 and 58 are sized and dimensioned to be fixedly received in corresponding grooves or structures (not shown) in optical hardware. As shown in FIGS. 7a and 7b, the shoulders 54 and 58 may also be round. Hence, fiber crimp tube 50 essentially functions as a terminal connector, and sleeve 62 functions as a boot. Alternatively, the sleeve 62 could be shrunk over the crimp end 56 (or crimp tube 20) without crimping such that the sleeve 62 holds the section of fiber optic component 60 to the fiber crimp tube 50.

Additionally, although fiber crimp tube 50 is discussed in connection with fiber optic fiber optic component 60 without strength fibers, fiber crimp tube 50 is also suitable for fiber optic components with strength fibers. In this situation, crimp end 56 may be crimped over the strength fibers and the outer protective coating. It is also possible to secure the strength fibers between the crimp end 56 and the heat shrink sleeve 62. Alternatively, shoulder 54 may have a bayonet connector disposed thereon, similar to the one disposed on crimp body 18 shown in FIG. 2a, 2b, 3a and 3b, to facilitate connection to the optical hardware.

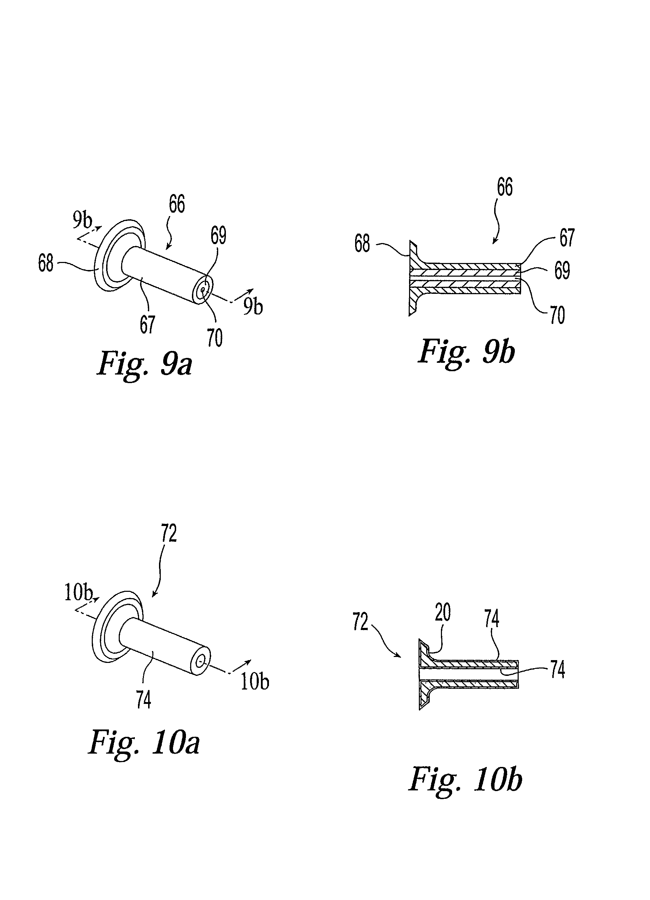

In accordance to another aspect of the present invention, FIGS. 9a and 9b show a fiber crimp tube 66. Similar to fiber crimp tube 20, fiber crimp tube 66 has an elongated body 67 and a shoulder 68. Fiber crimp tube 66 further has an inner compression sleeve 69. Sleeve 69 defines a lumen 70, which is adapted to receive an optical fiber. Advantageously, compression sleeve 69 is made from a compressible resilient material such as rubber. Compression sleeve 69 may be integral with or attached to the fiber crimp tube 66, or it may be a separate member that is either placed within the fiber crimp tube 66 or placed around the fiber optic component before being inserted into the fiber crimp tube 66. Preferably, the diameter of lumen 70 is slightly less than the outside diameter of fiber optic component 16, 16', 26, or 60. The difference in diameter between the lumen and the fiber optic component results in a slight compression of compression sleeve 69, such that to insert the optical fiber through the sleeve requires an insertion force that is higher than a predetermined threshold force. Preferably, the predetermined threshold force is higher than the slipping force caused by the thermal expansion or contraction of the fiber optic component, such that there is no relative movement between the fiber optic component 16, 16', 26, 60 and inner compression sleeve 69. The inner compression sleeve 69 may also be made from a water-resistant material to resist water from entering the fiber crimp tube. Additionally, the compressibility and resiliency of the inner compression sleeve provide a buffer zone protecting the optical fiber against the force applied to the fiber crimp tube during the crimping process. Alternatively, the inner diameter of the lumen is slightly larger than the outer diameter of the fiber optic component 16, 16', 26, 60 for ease of insertion, and during the crimping process inner compression sleeve 69 is compressed and brought into contact with the fiber optic component. Fiber crimp tube 66 with inner compression sleeve 69 is suitable for use with any fiber optic component, and is particularly suitable for use with a bare 125 µm optical fiber or with a 250 µm optical fiber with a thin protective jacket.

In accordance to another aspect of the present invention, FIGS. 10a and 10b show fiber crimp tube 72. Fiber crimp tube 72 comprises crimp tube 20, as described above and shown in FIGS. 1a-5b, covered by a protective layer 74. Preferably, layer 74 is a compressible, resilient waterproof material such as rubber. Layer 74 can be coated or sprayed on to the fiber crimp tube 20. Preferably, layer 74 is over-molded over fiber crimp tube 20 and preferably crimp tube 20 is more rigid than layer 74. Layer 74 may cover the inside and outside surface of the crimp tube as shown, or layer 74 may only cover a portion thereof. Preferably, the inside diameter of fiber crimp tube 72 is slightly smaller than the outer diameter of fiber optic component 16, 16', 26, 60 such that after the fiber optic component is inserted into the crimp tube, the optical fiber is sealed therein preventing water from entering the fiber crimp tube after installation. However, the inside diameter may also be larger if the fiber crimp tube 72 is to be compressed around the fiber optic component.

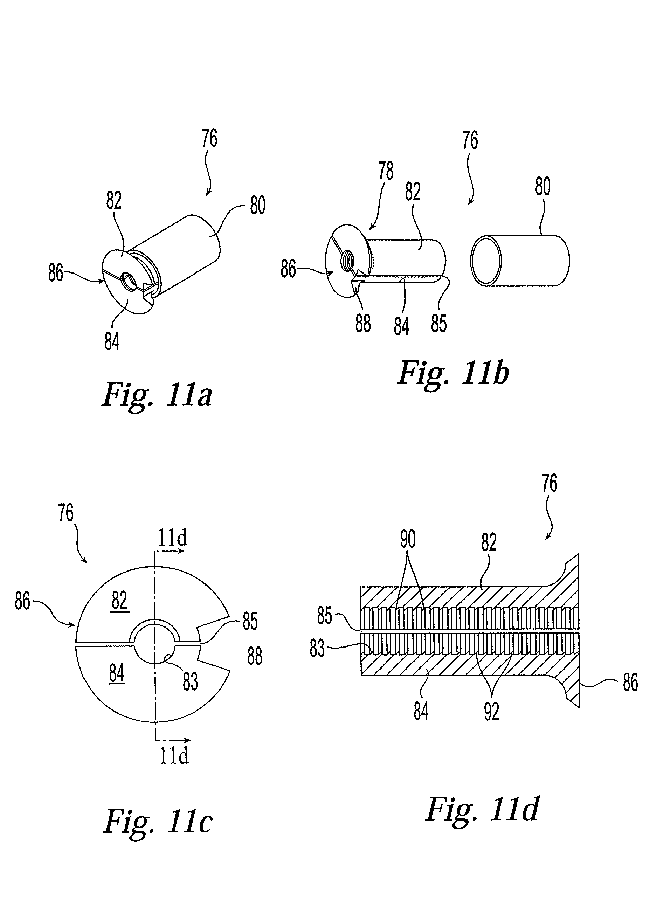

FIGS. 11a-11b illustrate another embodiment of the fiber crimp tube in accordance with the present invention. Fiber crimp tube 76 comprises a tube 78 and an optional sleeve 80. Tube 78 comprises first half 82 and second half 84 connected together by a hinge 85 and shoulder 86. Preferably, tube 78 is molded from any polymeric thermoplastic material, which allows the hinge 85 to be a living hinge. However, other methods of connecting the first half 82 and the second half 84 are also possible, especially if the fiber crimp tube is made from other materials. The types of hinges and methods of attaching the hinges are well-known in the art. Preferably, shoulder 86 has cut-out 88 proximate to living hinge 85 to allow the tube 78 to be opened about the living hinge 85 to receive fiber optic component 16, 16', 26, 60. Alternatively, tube 78 may comprise the two halves 82,84 and not have a hinge connecting the two halves. In such an embodiment, the cut-out 88 is not needed, but could be maintained. To provide sufficient clamping force on the optical fibers, the tube 78 can be held together around fiber optic component 16,16',26,60 by crimp band 14 (where crimp band 14 engages lip 32 of the shoulder 86 as shown in FIGS. 2b and 5b and described in the accompanying text). Crimp band 14 may also be configured to engage more than just the shoulder 82, including its entire length, especially if the fiber crimp tube 76 is inserted into the crimp band 64 with the shoulder 86 oriented away from the end portion 22. Alternatively, a sleeve 80 may optionally be provided to ensure that the fiber crimp tube 76 is secured to the fiber optic component. Sleeve 80 can be a crimp tube to be crimped on to first and second halves 82 and 84. Sleeve 80 can also be a heat shrink sleeve, similar to sleeve 62 discussed above, a rubber O-ring, or any other circular piece that prevents the halves 82,84 from separating. Preferably, sleeve 80 is a water-resistant to prevent water from running down the fiber and entering the fiber crimp tube 76, thereby providing a water-resistant connector.

Advantageously, first and second halves 82 and 84 may have a configuration on an inner surface 83 to engage the fiber optic component. As illustrated in FIG. 11d, each half 82,84 has a plurality of teeth 90 and 92, respectively, to grip the fiber optic component between the halves. Teeth 90 are oriented or angled in one predetermined direction, *e.g.*, in the direction toward shoulder 86, and teeth 92 are oriented or angled in the opposite direction. The opposite orientation of teeth 90 and 92 help prevent relative movement between the fiber optic component and the tube 78 in either direction. The invention is not limited to teeth on the interior surface 83 of fiber crimp tube 76, but could be any configuration that would provide resistance to movement of the fiber optic component relative to the tube 78. Such configurations would include a roughened surface, bumps or knob-like protrusions, internal rings, etc.

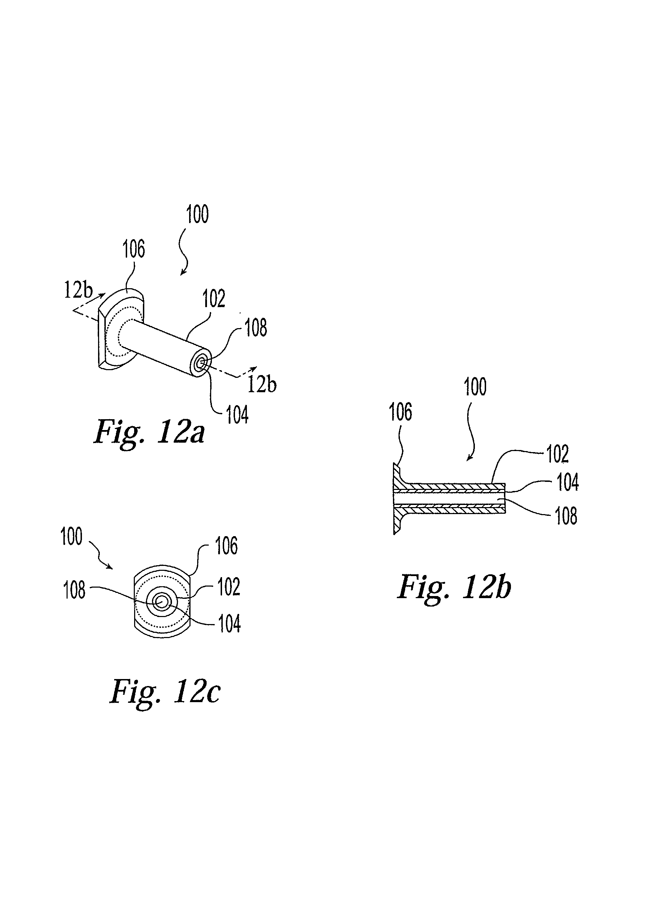

Another aspect of the invention is illustrated in FIGS. 12a-c. The fiber crimp tube 100, which is similar to that illustrated in FIGS. 9a and 9b, has an elongated body 102, a compression sleeve 104, and a shoulder 106. As with fiber crimp tube 66, compression sleeve 104 defines a lumen 108; however, compression sleeve 104 has a lumen 108 that allows multiple fiber optic components to pass through the lumen and the fiber crimp tube 100. The multiple fiber optic components may be a plurality of single optical fibers or even an optical ribbon having a plurality of optical fibers. The optical fibers may also be coated optical fibers as in the previous embodiments. Compression sleeve 104 may also be made from a compressible resilient material, which would similarly make the fiber crimp tube 100 water resistant, and it may be integral with the fiber crimp tube 100 or be separate. If the sleeve 104 were separate, it could be placed over the fiber optic components before being inserted into the tube 100 or inserted before the fiber optic components are passed through the lumen 108. The elongated body 102 could then be crimped around the fiber optic components as in the previous embodiments and using the tool of FIG. 8.

Rather than being round, shoulder 106 may be modified to fit within a rectangular connector or housing, which is consistent with multi-fiber applications as illustrated in FIGS. 12a-c. While the shoulder 106 is shown with two flat surfaces and two rounded surfaces, shoulder 106 could be made of any appropriate configuration and remain within the scope of the present invention.

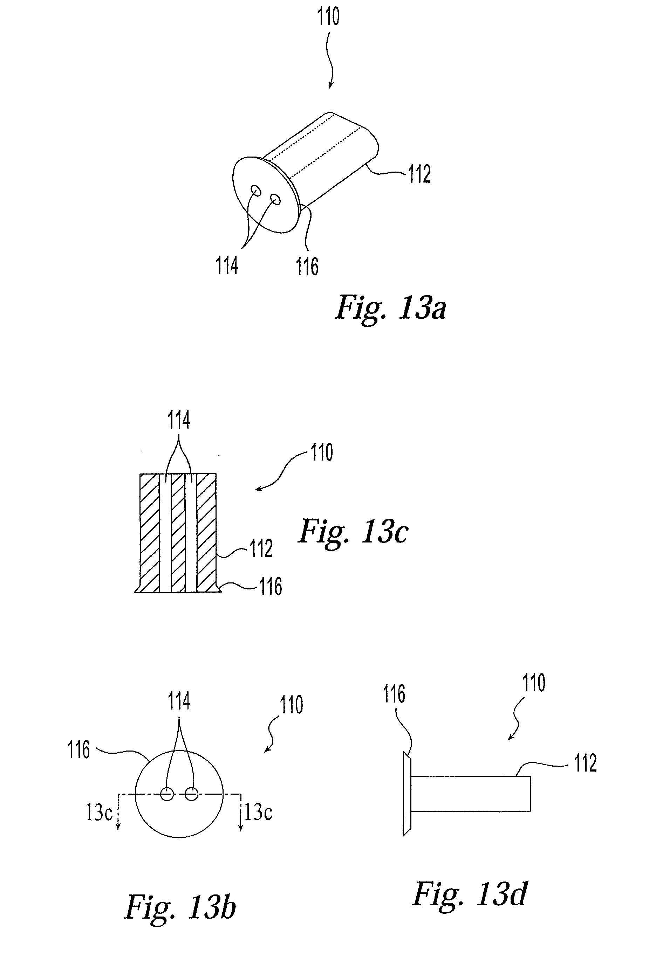

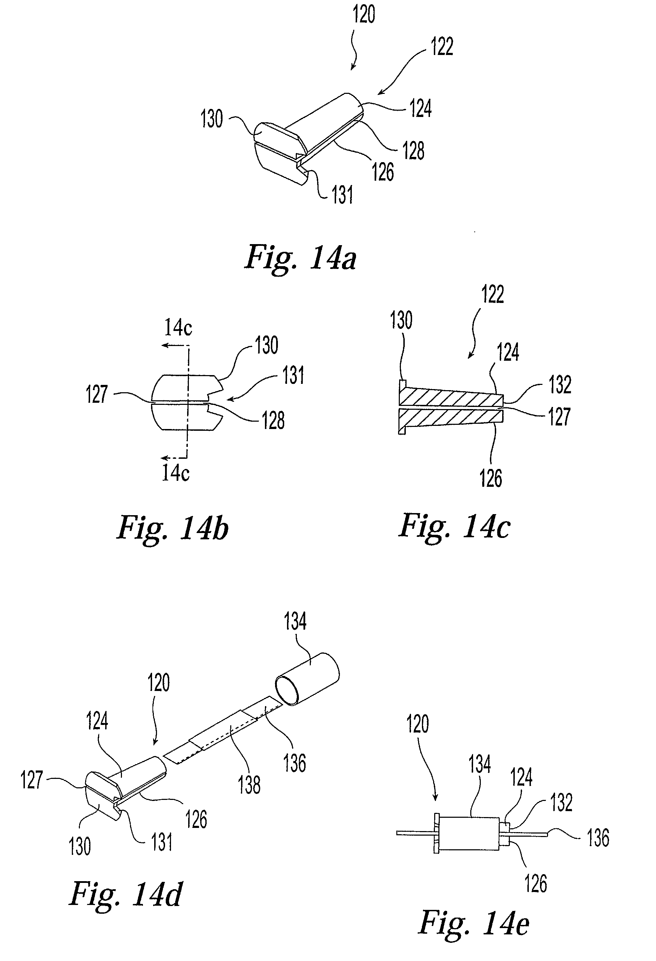

Additional embodiments of multi-fiber crimp tubes in accordance with the present invention are illustrated in FIGS. 13a-d and 14a-e. FIGS. 13a-d illustrate a fiber crimp tube 110 that has an elongated body 112, two passageways 114, and a shoulder 116. As with the previous embodiments, fiber optic components (not shown) are passed through the passageways, and the elongated body can be crimped around them. While two round passageways 114 are illustrated, passageways of any appropriate number, in any appropriate shape, and in any appropriate configuration could be present in the fiber crimp tube 110. Preferably, the fiber crimp tube 110 is made from a material that allows for deformity, brass for example, to allow the crimp tube to engage and hold the fiber optic components when crimped as discussed above with respect to the previous embodiments and the tool in FIG. 8. Alternatively each of the passageways 114 could also have a compression sleeve to provide not only waterproofing, but also resistance to any pulling forces on the fiber optic components. These compression sleeves may or not be integral with the fiber crimp tube 110.

Another embodiment of a multi-fiber crimp tube in accordance with the present invention is illustrated in FIGS. 14a-e. Fiber crimp tube 120 comprises a tube 122, which in turn comprises a first half 124 and a second half 126 that form a passageway127. First and second halves 124,126 are preferably connected by a hinge 128, although they could be separate elements. Hinge 128 is preferably a living hinge. Fiber crimp tube 120 also has a shoulder 130 that is preferably configured to be used in connection with multifiber connectors. When fiber crimp tube 120 has a hinge, shoulder 130 has a cut-out portion 131 to allow access to the passageway127. While the shoulder 130 is illustrated to have a generally rectangular shape, any appropriate configuration may be used and remain within the scope of the present invention. As illustrated in FIG. 14b, the first and second halves 124,126 are slightly tapered from the end of the fiber crimp tube 120 with the shoulder 130 to the opposite or front end 132. As with the previous embodiments, the fiber crimp tube 120 can be inserted into a crimp body that is similar to that illustrated in FIGS. 1-5 in order to keep halves 124,126 compressed around fiber optic components. However, as illustrated in FIGS. 14d and 14e, an optional sleeve 134 may be used to provide the compression around the fiber optic components. FIGS. 14d and 14e illustrate a portion of a fiber optic component, i.e., a ribbon of optical fibers 136, that will be held within the fiber crimp tube 120. Other configurations of fiber optic components could also be used (e.g., loose tube, 900 or 250 µm optical fibers, 2.0 mm optical fibers, a plurality of optical fiber ribbons). Preferably, a compression sleeve 138 is used to provide cushioning for the fiber optic component from the compressive forces by the tube 120. While shown as a separate piece, the compression sleeve 138 may be also be integral with or formed on each of the halves 124,126. The sleeve 138 can be a crimp tube to be crimped on to first and second halves 124 and 126. Sleeve 138 can also be a heat shrink sleeve, similar to sleeves 62 and 80 discussed above, a rubber O-ring, or other similar structure. Preferably, sleeve 138 is a water-resistant to prevent water from entering the fiber crimp tube 120. Since the halves 124,126 may be tapered, the pressure exerted on the fiber optic components can be adjusted by the inner diameter of the sleeve 134 that is used or the distance the sleeve 134 is moved toward the shoulder 130 and away from the front end 132. The sleeve 134 may also be a heat shrink sleeve similar to sleeve 62 discussed above. The heat shrink sleeve could be placed over the front end 132 and heat applied to shrink the sleeve over at least a portion of the fiber crimp tube and at least a portion of the fiber optic components.

While various descriptions of the present invention are described above, it is understood that the various features described in connection with the embodiments of the present invention can be used singly or in combination thereof. Therefore, this invention is not to be limited to the specifically preferred embodiments depicted therein.

## Claims

1. A connector secured to an end portion of a fiber optic component comprising:
a crimp assembly wherein strength fibers associated with the fiber optic component are secured to the crimp assembly;
a fiber crimp tube fixedly engaging the crimp assembly and fixedly secured to an optical fiber component such that there is substantially no relative movement between the fiber and the crimp assembly.

2. The connector of claim 1, wherein the crimp assembly comprises a crimp band and a crimp body adapted to crimp the strength fibers therebetween.

3. The connector of claim 1, wherein the optical fiber component comprises at least one optical fiber and at least one protective coating.

4. The connector of claim 1, wherein the optical fiber component comprises a bare optical fiber.

5. The connector of claim 5, further comprising a compression element and wherein the compression element is compressed between the fiber crimp tube and the bare optical fiber.

6. The connector of claim 1, wherein the fiber crimp tube is attached to the optical fiber component by adhesive.

7. The connector of claim 1, wherein the fiber crimp tube is attached to the optical fiber component by a heat shrink sleeve.

8. The connector of claim 1, further comprising a heat shrink sleeve covering at least a portion of the fiber crimp tube and a portion of the optical fiber component.

9. The connector of claim 1, wherein the fiber crimp tube has a shoulder disposed at one end thereof and the shoulder is captured in the crimp assembly.

10. The connector of claim 9, wherein the shoulder is captured between a crimp body and a crimp band of the crimp assembly.

11. The connector of claim 1, wherein the fiber crimp tube comprises a first portion and a second portion.

12. The connector of claim 11, wherein the first portion is connected to the second portion by a hinge.

13. The connector of claim 1, wherein the fiber crimp tube has at least one passageway therein and the optical fiber component is disposed therein.

14. The connector of claim 1, wherein the fiber crimp tube has a plurality of passageways therein.

15. The connector of claim 13, wherein the passageway has an inner surface and the inner surface has engagement means thereon.

16. The connector of claim 14, wherein the engagement means comprises teeth.

17. The connector of claim 1, wherein the fiber optic component comprises fiber optic ribbon.

18. An optical fiber module attachment comprising a tubular body member and a shoulder disposed at one end of the body member, said module attachment is attachable to a fiber optic component and said shoulder is insertable into a connector to engage an optical component.

19. The optical fiber module attachment of claim 11, wherein the fiber optic component comprises an optical fiber.

20. The optical fiber module attachment of claim 11, wherein the fiber optic component comprises fiber optic ribbon.

21. The optical fiber module attachment of claim 12, wherein the optical fiber further comprises at least one protective coating.

22. The optical fiber module attachment of claim 11, wherein the body member is also insertable into the connector.

23. The optical fiber module attachment of claim 11, further comprises an inner compression sleeve disposed between the body member and the fiber optic component.

24. The optical fiber module attachment of claim 15, wherein the inner compression sleeve is made from a resilient material.

25. The optical fiber module attachment of claim 16, wherein the inner compression sleeve is compressed between the body member and the fiber optic component.

26. The optical fiber module attachment of claim 15, wherein the inner compression sleeve is made from a water resistant material.

27. The optical fiber module attachment of claim 11, wherein the optical fiber module attachment is covered with a water resistant material.

28. The optical fiber module attachment of claim 11, wherein the optical fiber module attachment comprises a first portion and a second portion.

29. The connector of claim 20, wherein the fiber crimp tube has at least one passageway therein and the fiber optic component is disposed therein.

30. The connector of claim 13, wherein the passageway has an inner surface and the inner surface has engagement means.

31. The connector of claim 14, wherein the engagement means comprises teeth.

32. The connector of claim 14, wherein the engagement means comprises protrusions.

33. The optical fiber module attachment of claim _, wherein the first and second portions each comprise a plurality of teeth.

34. The optical fiber module attachment of claim 21, wherein the teeth from the first portion and the teeth from the second portion are oriented in opposite directions.

35. The optical fiber module attachment of claim 20 wherein the first portion and the second portion are connected by a hinge.

36. The optical fiber module attachment of claim 20 wherein the first portion and the second portion are secured to the fiber optic component by a sleeve.

37. The optical fiber module attachment of claim 24, wherein the sleeve is selected from the group consisting of a crimp tube and a heat shrink sleeve and an O-ring.

38. The optical fiber module attachment of claim 24, wherein the sleeve is made from a water resistant material.

39. An optical fiber module attachment comprising a tubular body member and a first shoulder, said module attachment is attachable to an fiber optic component and said first shoulder is engagable with an optical device.

40. The optical fiber module attachment of claim 27, wherein said device comprises a second shoulder.

41. The optical fiber module attachment of claim 27, wherein a connector is disposed on the shoulder.

42. The optical fiber module attachment of claim 29, wherein the connector is a bayonet mount.

43. The optical fiber module attachment of claim 27, wherein the tubular member has a crimp end, said crimp end is crimped to the fiber optic component.

44. The optical fiber module attachment of claim 31, wherein a radius bending reduction device is attached to the crimped end and a portion of the fiber optic component.

45. The optical fiber module attachment of claim 32, wherein the radius bending reduction device is a heat shrinkable sleeve.

46. The optical fiber module attachment of claim 27, further comprises an inner compression sleeve disposed between the body member and the fiber optic component.

47. The optical fiber module attachment of claim 34, wherein the inner compression sleeve is made from a resilient material.

48. The optical fiber module attachment of claim 35, wherein the inner compression sleeve is compressed between the body member and the fiber optic component.

49. The optical fiber module attachment of claim 34, wherein the inner compression sleeve is made from a water resistant material.

50. The optical fiber module attachment of claim 27, wherein the optical fiber module attachment is covered with a water resistant material.

51. The optical fiber module attachment of claim 27, wherein the optical fiber module attachment comprises a first portion and a second portion.

52. The optical fiber module attachment of claim 39, wherein the first and second portions each comprises a plurality of teeth.

53. The optical fiber module attachment of claim 40, wherein the teeth from the first portion and the teeth from the second portion are orientated in opposite directions.

54. The optical fiber module attachment of claim 40 wherein the first portion and the second portion are connected by a hinge.

55. The optical fiber module attachment of claim 39 wherein the first portion and the second portion are secured to the optical fiber by a sleeve.

56. The optical fiber module attachment of claim 43, wherein the sleeve is selected from the group consisting of a crimp tube, a heat shrink sleeve, and an O-ring.

57. The optical fiber module attachment of claim 43, wherein the sleeve is made from a water resistant material.
